# EUROPÄISCHE PATENTSCHRIFT

(11) **EP 3 488 127 B1**
(45) Veröffentlichungstag und Bekanntmachung des Hinweises auf die Patenterteilung: **17.06.2020**
(21) Anmeldenummer: 17725940.5
(22) Anmeldetag: 23.05.2017
(51) Int. Cl.: F16J 9/20

(54) **EINTEILIGER ÖLABSTREIFRING**
ONE PIECE OIL SCRAPING RING
SEGMENT RACLEUR EN UNE PIÈCE

(30) Priorität: 25.07.2016 DE 102016113678
(43) Veröffentlichungstag der Anmeldung: 29.05.2019
(73) Patentinhaber: Federal-Mogul Burscheid GmbH, 51399 Burscheid (DE)
(72) Erfinder: MITTLER, Richard, 51399 Burscheid (DE); RUCH, Fabian, 51375 Leverkusen (DE)
(74) Vertreter: Becker & Kurig Partnerschaft Patentanwälte PartmbB
(86) Internationale Anmeldenummer: PCT/EP2017/062345
(87) Internationale Veröffentlichungsnummer: WO 2018/019445

(56) Entgegenhaltungen:
- DE-C- 211 249
- JP-A- 2004 278 378
- US-A- 1 832 795

## Beschreibung

### Gebiet der Erfindung

Die vorliegende Erfindung betrifft Kolbenringe, insbesondere einen einteiligen Ölabstreifring.

### Stand der Technik

In Viertaktmotoren besteht eines der Hauptprobleme in der Kontrolle und Abdichtung des Kolbenring-Kolben-Systems von und mit im Kurbelgehäuse vorhandenem Öl; hierzu werden Kolbenringe eingesetzt, die den Brennraum möglichst gut vom Kurbelgehäuseöl abdichten sollen. Zu beachten ist dabei, dass eine gewisse Ölmenge im System notwendig ist, um die Funktionsfähigkeit des Kolbenring-Systems in Bezug auf Reibung und auf Abdichtung von Gas aus dem Brennraum zu gewährleisten. Diese definierte Ölmenge soll einerseits möglichst klein gehalten werden, ohne andererseits den hydrodynamischen Schmierfilm auf den Kolbenringlaufflächen zu unterbinden. Insbesondere der Ölabstreifring muss die Kontrolle für ein perfektes Gleichgewicht zwischen Ölemissionen, Funktionsfähigkeit und Verschleißfestigkeit erreichen.

Ölabstreifringe, im Folgenden auch als Ölringe bezeichnet, werden derzeitig meist als zwei- oder dreiteilige Ausführungen in LVD, LVP HD Motoren eingesetzt. Bei zweiteiligen Ringen ist ein Ringträger mit einer innenliegenden Feder ausgelegt. Auf der Lauffläche des Kolbenrings sind zwei Stege angeordnet, die überschüssiges Öl von der Zylinderwand abstreifen, wobei sich zwischen den Stegen Öffnungen, in Form von z.B. Bohrungen oder Schlitzen, befinden, welche überschüssiges Öl von der Außenseite zu der Innenseite des Kolbenrings leiten. Bezüglich ihrer Höhe und Tiefe und ihrer Anordnung auf der Lauffläche sind die Stege meist symmetrisch ausgelegt. Die innenliegende Feder erzeugt die notwendigen Kräfte, um die außenliegende Lauffläche des Kolbenrings, d.h. die an der Lauffläche angeordneten Stege, gegen die Zylinderwand zu pressen.

Bei kleinen Bauweisen ist ein solcher mehrteiliger Aufbau aufwendig in der Herstellung, kompliziert beim Einbau und anfällig für Beschädigungen und Verschleiß. Es besteht also Bedarf an einem Ölabstreifring, der diese Probleme nicht aufweist und eine hinreichend gleichmäßige Anpresskraft gegen die Zylinderwand erzeugt, um seine Ölabstreiffunktion zu erfüllen.

Ein einteiliger Ölabstreifring gemäß dem Stand der Technik ist bekannt aus US 1,832,795.

### Zusammenfassung der Erfindung

Dies wird erreicht durch einen einteiligen Ölabstreifring, der einen Ringkörper mit einer in Umlaufrichtung konstanten radialen Dicke aufweist, wobei an einer außenliegenden Lauffläche des Ringkörpers in Umlaufrichtung umlaufend zwei durch eine Außennut axial voneinander beabstandete Stege angeordnet sind und wobei Öffnungen angeordnet sind, die radial vom Boden der Außennut zu der Innenseite des Ringkörpers verlaufen, wobei an der Innenseite des Ringkörpers zwei Innennuten angeordnet sind, die in Umlaufrichtung umlaufen und wobei in einem (jeweiligen) Bereich jedes Stoßendes jeweils eine der Innennuten beginnt, und die Querschnittsfläche der Innennuten vom Ringstoß in Richtung Ringrücken abnimmt, wobei die Tiefe der Innennuten vom Ringstoß in Richtung Ringrücken abnimmt, wobei die Öffnungen nur innerhalb eines vom Ringstoß aus gemessenen Winkelbereichs von 0 bis 135° und von 225° bis 360° angeordnet sind.

Gemäß einem Aspekt der vorliegenden Erfindungen sind die Öffnungen innerhalb eines vom Ringstoß aus gemessenen Winkelbereichs von 0° bis 90° und von 270° bis 360°, angeordnet.

Gemäß einem weiteren Aspekt beträgt die Tiefe der Innennuten in einem vom Ringstoß aus gemessenen Winkelbereich von 135° bis 225°, bevorzugt in einem Winkelbereich von 165° bis 195°, weiter bevorzugt in einem schmalen Winkelbereich, der im Wesentlichen nur den Winkel 180° einschließt, Null.

Gemäß einem weiteren Aspekt nimmt die Tiefe der Innennuten in proportionaler Weise mit dem vom Ringstoß aus gemessenen Winkel ab.

Gemäß einem weiteren Aspekt ist der Beginn der Innennuten vom jeweiligen Stoßende beabstandet ist.

Gemäß einem weiteren Aspekt ist die axiale Höhe der Innennuten an der Ringinnenseite kleiner als die gesamte axiale Höhe des Rings ist.

Gemäß einem weiteren Aspekt nimmt die axiale Höhe der Innennuten an der Ringinnenseite ausgehend vom Ringstoß in Richtung Ringrücken ab.

Gemäß einem weiteren Aspekt liegt die maximale Tiefe der Innennuten in einem Bereich von 25% bis 100%, bevorzugt von 50% bis 100%, weiter bevorzugt von 75% bis 100%, der axialen Höhe des Ölabstreifrings.

Gemäß einem weiteren Aspekt nimmt die Tiefe der Außennut ausgehend von den beiden Stoßenden in Richtung Ringrücken ab.

Gemäß einem weiteren Aspekt ist die Tiefe der Außennut in einem vom Ringstoß aus gemessenen Winkelbereich von 135° bis 225°, bevorzugt in einem Winkelbereich von 165° bis 195°, weiter bevorzugt in einem schmalen Winkelbereich, der im Wesentlichen nur den Winkel 180° einschließt, konstant.

Gemäß einem weiteren Aspekt nimmt die Tiefe der Außennut in proportionaler Weise mit dem vom Ringstoß aus gemessenen Winkel ab.

Gemäß einem weiteren Aspekt sind die obere und die untere Hälfte des Ringkörpers symmetrisch zueinander.

Es wird der üblichen Bezeichnungsweise gefolgt, dass sich axial auf die entsprechende Richtung des Kolbens bezieht, also die Richtung der Hin- und Herbewegung desselben, bzw. auf die entsprechende Achse des Kolben-Zylinders. Die Ringachse ist die durch den Mittelpunkt des Ringes in axiale Richtung verlaufende Achse, die im eingebauten Zustand mit der Mittelachse des Kolbens zusammenfällt. Eine radiale Richtung ist entsprechend eine Richtung die, parallel zur Ringebene, rechtwinklig auf die Ringachse zu oder rechtwinklig von dieser weg verläuft. Als axialer Schnitt wird ein Schnitt bezeichnet, dessen Schnittebene die Ringachse beinhaltet.

### Kurze Beschreibung der Zeichnung

Im Folgenden werden beispielhafte Ausführungsformen der Erfindung unter Bezug auf die Figuren genauer beschrieben, wobei
Figur 1 eine Draufsicht und Schnittdarstellungen einer ersten Ausführungsform der vorliegenden Erfindung zeigt;
Figuren 2A und 2B Draufsichten und Schnittdarstellungen einer zweiten Ausführungsform zeigen.

Die Figuren sollen den prinzipiellen Aufbau der vorliegenden Erfindung verdeutlichen, den Umfang der Erfindung jedoch nicht einschränken.

### Ausführliche Beschreibung der Erfindung

Der hier beschriebene Ölring zeichnet sich durch eine Ausführung ohne Feder aus, wobei die notwendige Tangentialkraft (Anpresskraft) durch eine entsprechende Auslegung erzeugt wird. Spreizung und Wanddicke des Rings werden dabei so gewählt, dass die Flächenpressung heutigen zwei- bzw. dreiteiligen Ölabstreifringen entspricht. Der Querschnitt des Ringkörpers wird durch innenliegende Nuten in Umlaufrichtung entsprechend variiert. Da der Ringkörper in Umlaufrichtung eine konstante radiale Dicke und eine konstante axiale Höhe aufweist, wird hierzu die Querschnittfläche der innenliegenden Nuten in Umlaufrichtung variiert, zusätzlich kann auch die außenliegende Nut des Ölabstreifrings variiert werden.

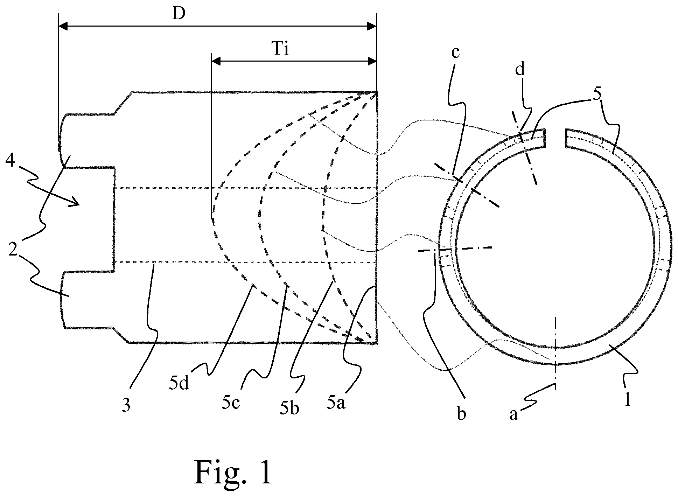

In Fig. 1 ist eine erste beispielhafte Ausführungsform des erfindungsgemäßen Ölabstreifrings dargestellt, welche die Variation der Querschnittsfläche durch eine Änderung der Tiefe innenliegender Nuten erzeugt. Der Ölabstreifring umfasst einen Ringkörper 1, welcher eine in Umlaufrichtung konstante radiale Dicke D und Höhe aufweist. Die Dicke ist hier jeweils die radiale Ausdehnung des Ringkörpers in einem axialen Schnitt, die radial weitest außen bzw. weitest innen liegenden Linien/Flächen können also in radiale Richtung als Referenz für die Bestimmung der radialen Tiefe der Nuten dienen.

An einer Lauffläche des Ringkörpers sind in einem axialen Abstand zwei in Umlauflichtung umlaufende Stege 2 angeordnet, welche nach Einbau an der Zylinderwand anliegen und die eigentliche Ölabstreiffunktion übernehmen. Diese Abstreifstege 2 erstrecken sich über den ganzen Umfang des Rings. Von dem außenliegenden Laufflächenbereich zwischen den beiden Stegen, d.h. vom Boden einer zwischen den Stegen liegenden Außennut 4, verlaufen Öffnungen 3, etwa Bohrungen oder Schlitze, radial nach innen durch den Ringkörper hindurch. Öl das sich zwischen den Stegen ansammelt kann durch diese Öffnungen 3 zur Kolbenringinnenseite abgeleitet werden und von dort in das Kurbelgehäuse weitergeleitet werden.

An der Kolbenringinnenseite sind zwei Innennuten 5, d.h. innenliegende Nuten, angeordnet, deren Tiefe Ti sich in Umlaufrichtung ändert. Hier ist unter Tiefe an einer Winkelposition in Umlaufrichtung der radiale Abstand von einem radial weitest außen liegenden Punkt der Nut zu einem radial weitest innenliegenden Punkt der Oberfläche der Kolbenringinnenseite in einem axialen Schnitt an dieser Winkelposition zu verstehen, oder anders formuliert die maximale Ausdehnung der Nut in radialer Richtung in einem axialen Schnitt an dieser Winkelposition.

In Umlaufrichtung weisen die beiden Innennuten 5 ihre jeweilige größte Tiefe in jeweils einem Bereich in der Nähe der beiden Stoßenden auf. Um zu verhindern, dass Öl von den Innennuten direkt in den Ringstoß fließt, können die Innennuten gegebenenfalls so gestaltet werden, dass sie erst in einem Abstand von den Stoßenden beginnen, an den Stoßenden bleibt also ein dünner (1 mm bis einige mm bei einem Ring mit z.B. 80 mm oder 100 mm Durchmesser) Steg stehen. Die Tiefe Ti der Innennuten 5 nimmt in Richtung des Ringrückens ab, und im Bereich des Ringrückens ist keine Nut mehr vorhanden. Durch die Abnahme der Tiefe Ti der Innennuten nimmt auch deren Querschnittsfläche ab.

An den Stoßenden liegen also minimale radiale Wanddicken vor und im Ringrücken wird die Wanddicke entsprechend verstärkt. Auf diese Weise erfolgt eine Reduzierung des Flächenträgheitsmoments in Richtung der Stoßenden, womit ein gleichmäßiger Anpressdruck an die Zylinderwand in Umlaufrichtung erzeugt wird und das zur Abdichtung notwendige Formfüllvermögen erreicht wird.

Auf der linken Seite der Fig. 1 sind hierzu axiale Schnitte 5a, 5b, 5c, 5d einer der Innennuten (als gestrichelte Linien dargestellt) an entsprechenden verschiedenen Winkelpositionen a, b, c, d in Umlaufrichtung skizziert. Die Tiefe Ti der Innennuten ist stellvertretend nur für den Schnitt 5d eingezeichnet, welcher der dem Ringstoß nächstgelegenen Winkelposition d entspricht. Die Innennuten sind hier parabelförmig dargestellt, es sind jedoch auch andere Formen denkbar, beispielsweise eine andere gerundete Form (Ellipse, Kreis), eine rechteckige Nut oder eine V-förmige Nut. Bei der dargestellten parabelförmigen Nut nimmt mit der Tiefe gleichzeitig die in einem bestimmten radialen Abstand von der Ringinnenseite gemessene axiale Höhe ab, was ebenfalls zur Abnahme der Querschnittsfläche beiträgt. Dieser Effekt tritt gegebenenfalls auch bei anders geformten Nuten auf; z.B. bei einer V-Form, jedoch nicht bei einer Rechteckform.

Die Tiefe Ti der Innennuten 5 nimmt vom Ringstoß ausgehend in Richtung Ringrücken ab. Diese Abnahme erfolgt bevorzugt im Wesentlichen in proportionaler Weise mit dem vom Ringstoß aus gemessenen Winkel. Die Winkeleinteilung ist also so gewählt, dass sich der Ringstoß bei 0° befindet, der Ringrücken bei 180°. Am Ringrücken selbst ist die Nut nicht mehr vorhanden, sozusagen beträgt die Tiefe Ti der Innennuten 5 hier also Null. Am Ringrücken (dem in Fig. 1 die Winkelposition a entspricht) ist die Innenseite des Rings also in einem gewissen Winkelbereich ohne Nut ausgebildet. Dieser Winkelbereich kann 135° bis 225° betragen, bevorzugt 165° bis 195°, weiter bevorzugt ist nur ein schmaler Winkelbereich, maximal ±5°, der im Wesentlichen nur den Winkel 180° einschließt, ohne Nut.

Die Tiefe Ti der Innennuten 5 in dem Bereich in der Nähe des Ringstoßes in dem die Nuten beginnen, also die maximale Tiefe der Innennuten, da die Tiefe in Richtung Ringrücken abnimmt, soll dabei in einem Bereich von 25% bis 100%, bevorzugt in einem Bereich von 50% bis 100%, weiter bevorzugt in einem Bereich von 75% bis 100%, der axialen Höhe des Ölabstreifrings liegen. Insbesondere sollte die maximale Tiefe der Innennuten 100% der axialen Höhe des Ölrings nicht überschreiten, da sonst die verbleibende radiale Ringdicke zu klein wird und sich die Gefahr eines Bruchs erhöht.

Die Öffnungen 3 für den Öldurchfluss werden nur in den Bereichen der kleineren Wanddicken angeordnet. Wieder vom Ringstoß aus gemessenen ist hierfür der Winkelbereich von -135° bis +135°, d.h. 225° bis 360° und 0° bis 135°, bevorzugt von -90° bis +90°, d.h. 270° bis 360° und 0° bis 90°, vorgesehen. Durch diese Auslegung wird ein Ölfluss an der Außenseite des Ölabstreifrings in Richtung der Öffnungen erzeugt; die Innennuten 5 führen zu einer zusätzlichen Kontrolle des Ölflusses hinter dem Ring.

Natürlich muss der Rand der Nut nicht - wie in der Figur dargestellt - notwendigerweise mit den oberen und unteren Ringinnenkanten zusammentreffen. Die Oberfläche der Ringinnenseite kann z.B. obere und unter Bereiche aufweisen, die parallel zur Ringachse sind, also keine Nut aufweisen, während sich die Innennut lediglich in einem dazwischenliegenden mittleren Bereich befindet. Definiert man die axiale Höhe der Innennuten an einer Winkelposition in Umlaufrichtung als die maximale Ausdehnung der Innennuten in axialer Richtung in einem axialen Schnitt an dieser Winkelposition, dann ist diese axiale Höhe der Innennuten also zumindest in einem gewissen Winkelbereich kleiner als die Gesamthöhe des Rings. Bevorzugt nimmt die axiale Höhe der Innennuten ausgehend vom Ringstoß in Richtung Ringrücken ab, womit auch die Querschnittsflächen der Innennuten in Richtung Ringrücken abnehmen, wenn die Tiefen der Innennuten nicht zunehmen. Denkbar ist auch die axiale Höhe der Innennuten bei den Positionen der Öffnungen zu verringern, um die durch Öffnungen verursachte Schwächung des Ringkörpers an diesen Stellen zu kompensieren.

Weiter sind die obere und die untere Ringhälfte bevorzugt symmetrisch zueinander, d.h. spiegelsymmetrisch bzgl. einer Ebene auf halber Ringhöhe, so dass beim Einbau des Ölabstreifrings kein Ringtwist auftritt und die beiden Stege 2 sowohl in Umlaufrichtung, als auch in Bezug zueinander, mit gleichmäßiger Flächenpressung an der Zylinderwand anliegen. Sind die Innennuten 5 selbst symmetrisch gestaltet, so wird dies erreicht indem diese Nuten mittig bezüglich der axialen Höhe des Ringkörpers 1 angeordnet werden. Natürlich sollten auch die Lauffläche und die Öffnungen 3 entsprechend gestaltet sein, um ein Twisten des Rings unter Spannung zu vermeiden.

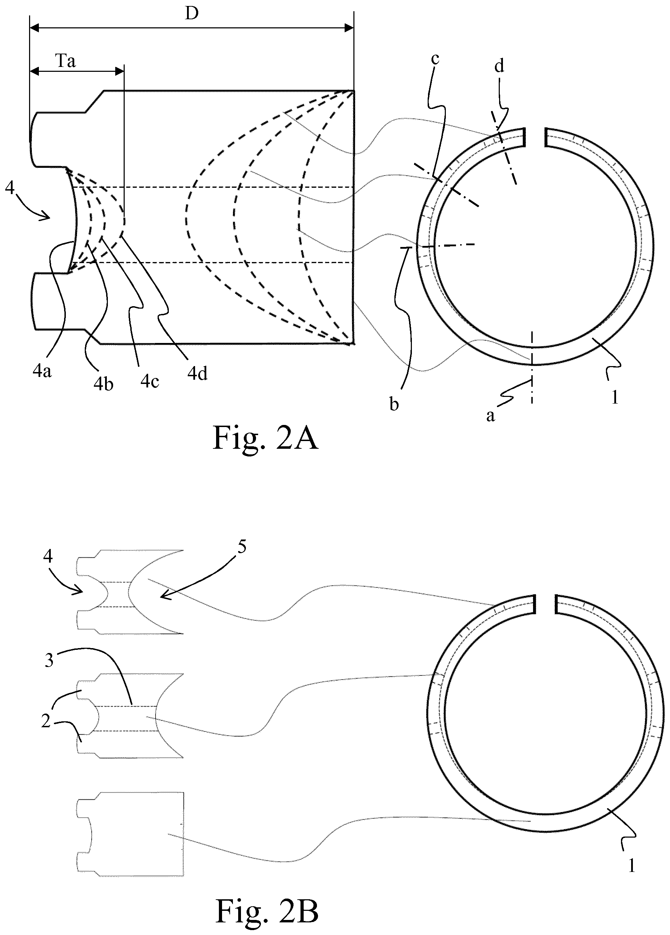

In den Figuren 2A und 2B ist eine zweite beispielhafte Ausführungsform dargestellt. Die oben in Bezug auf Fig. 1 vorgebrachten Erläuterungen zu den Innennuten 5 sind auch hier gültig. Zusätzlich variiert bei der zweiten Ausführungsform auch die Tiefe Ta (wieder stellvertretend nur für 4d eingezeichnet) der Außennut 4. Dies ist auf der linken Seite der Fig. 2A in axialen Schnitten 4a, 4b, 4c, 4d, die den Winkelpositionen a, b, c, d auf der rechten Seite der Figur entsprechen, dargestellt. Dabei weist die Außennut 4 ihre größte Tiefe an den beiden Stoßenden auf und ihre Tiefe Ta nimmt ausgehend vom Ringstoß jeweils in Umlaufrichtung in Richtung Ringrücken ab, womit der Querschnitt variiert. Auf eine Variation der axialen Höhe wird hier verzichtet, um die Ölabstreiffunktion der Stege 2 nicht zu gefährden. Aus demselben Grund verlaufen die Nutwände in einem radial äußeren Bereich bevorzugt möglichst senkrecht zur Ringachse. Der Boden der Außennut 4 kann - ähnlich wie der Boden der Innennuten 5 - eine gerundete (z.B. parabelförmig wie in den Figuren) oder eine polygonale Form besitzen.

Die Abnahme der Tiefe Ta der Außennut 4 in Richtung Ringrücken kann in proportionaler Weise zum vom Ringstoß aus gemessenen Winkel erfolgen. In einem Bereich am Ringrücken kann die Außennut 4 eine konstante Tiefe Ta aufweisen, die größer als Null sein sollte, da ansonsten am Ringrücken keine zwei Abstreifstege mehr vorhanden wären, was die Funktion des Ölrings erheblich einschränkte. Bevorzugt liegt dieser vom Ringstoß aus gemessene Winkelbereich mit konstanter Außennuttiefe Ta zwischen 135° und 225°, weiter bevorzugt zwischen 165° und 195°, am meisten bevorzugt in einem schmalen Bereich, der im Wesentlichen nur den Winkel 180° einschließt.

Durch diese Gestaltung der Außennut 4 wird ein gezielter Ölfluss an der Außenseite des Rings in Richtung der Öffnungen 3 gewährleistet, die sich wie bereits oben ausgeführt bevorzugt in einem Bereich mit einer kleineren Ringdicke, also in einem Bereich in der Nähe des Ringstoßes, befinden. Auch können die durch die Querschnittsfläche der Innennuten 5 und die zusätzliche Tiefe der Außennut 4 bereitgestellten Volumina Öl aufnehmen und die Kontrolle des Ölflusses verbessern. Am Ringstoß ist das Volumen vergrößert gegenüber dem Volumen am Ringrücken, ein Ölfluss in Richtung Ringstoß, in dessen Nähe die Öffnungen angebracht sind, ist somit gewährleistet.

Auf der linken Seite der Figur 2B sind drei einzelne axiale Schnitte des Ölabstreifrings dargestellt, dies soll die Anpassung der Querschnitte in Umlaufrichtung und die damit verbundene Anpassung der Flächenträgheitsmomente weiter verdeutlichen. In der Nähe des Ringstoßes (oberster Schnitt) weist der Ringkörper 1 die geringste Wanddicke (und mithin das geringste Flächenträgheitsmoment) auf, am Ringrücken die größte Wanddicke. Damit wird ohne eine innenliegende Feder, wie sie bei zwei- bzw. dreiteiligen Ölabstreifringen Verwendung findet, ein in Umlaufrichtung gleichmäßiger Anpressdruck erreicht. Dies führt zu einer Verschleißreduzierung, da kein Feder-Ringkörper-Kontakt vorhanden ist. Weiter führt die einteilige Auslegung zu einer Vereinfachung der Montage und zu einer Kostenreduzierung.

## Patentansprüche

1. Einteiliger Ölabstreifring, umfassend einen Ringkörper (1), der eine in Umlaufrichtung konstante radiale Dicke (D) aufweist;
wobei an einer außenliegenden Lauffläche des Ringkörpers in Umlaufrichtung umlaufend zwei durch eine Außennut (4) axial voneinander beabstandete Stege (2) angeordnet sind;
**dadurch gekennzeichnet, dass** Öffnungen (3) angeordnet sind, die radial vom Boden der Außennut zu der Innenseite des Ringkörpers verlaufen;
wobei an der Innenseite des Ringkörpers zwei Innennuten (5) angeordnet sind, die in Umlaufrichtung umlaufen;
wobei in einem Bereich jedes Stoßendes jeweils eine der Innennuten beginnt, und
wobei die Querschnittsfläche der Innennuten vom Ringstoß in Richtung Ringrücken abnimmt;
wobei die Tiefe (Ti) der Innennuten (5) vom Ringstoß in Richtung Ringrücken abnimmt;
wobei die Öffnungen (3) nur innerhalb eines vom Ringstoß aus gemessenen Winkelbereichs von 0 bis 135° und von 225° bis 360° angeordnet sind.

2. Einteiliger Ölabstreifring nach Anspruch 1, wobei die Öffnungen (3) innerhalb eines vom Ringstoß aus gemessenen Winkelbereichs von 0 bis 90° und von 270° bis 360° angeordnet sind.

3. Einteiliger Ölabstreifring nach einem der vorstehenden Ansprüche, wobei die Tiefe (Ti) der Innennuten (5) in einem vom Ringstoß aus gemessenen Winkelbereich von 135° bis 225°, bevorzugt in einem Winkelbereich von 165° bis 195°, weiter bevorzugt in einem schmalen Winkelbereich, der im Wesentlichen nur den Winkel 180° einschließt, Null beträgt.

4. Einteiliger Ölabstreifring nach einem der vorstehenden Ansprüche, wobei die Tiefe (Ti) der Innennuten (5) in proportionaler Weise mit dem vom Ringstoß aus gemessenen Winkel abnimmt.

5. Einteiliger Ölabstreifring nach einem der vorstehenden Ansprüche, wobei der Beginn der Innennuten (5) vom jeweiligen Stoßende beabstandet ist.

6. Einteiliger Ölabtreifring nach einem der vorstehenden Ansprüche, wobei die axiale Höhe der Innennuten (5) an der Ringinnenseite kleiner als die gesamte axiale Höhe des Rings ist.

7. Einteiliger Ölabtreifring nach Anspruch 6, wobei die axiale Höhe der Innennuten (5) an der Ringinnenseite ausgehend vom Ringstoß in Richtung Ringrücken abnimmt.

8. Einteiliger Ölabstreifring nach einem der vorstehenden Ansprüche, wobei die maximale Tiefe der Innennuten (5) in einem Bereich von 25% bis 100%, bevorzugt von 50% bis 100%, weiter bevorzugt von 75% bis 100%, der axialen Höhe des Ölabstreifrings liegt.

9. Einteiliger Ölabstreifring nach einem der vorstehenden Ansprüche, wobei die Tiefe (Ta) der Außennut (4) ausgehend von den beiden Stoßenden in Richtung Ringrücken abnimmt.

10. Einteiliger Ölabstreifring nach einem der vorstehenden Ansprüche, wobei die Tiefe (Ta) der Außennut (4) in einem vom Ringstoß aus gemessenen Winkelbereich von 135° bis 225°, bevorzugt in einem Winkelbereich von 165° bis 195°, weiter bevorzugt in einem schmalen Winkelbereich, der im Wesentlichen nur den Winkel 180° einschließt, konstant ist.

11. Einteiliger Ölabstreifring nach einem der vorstehenden Ansprüche, wobei die Tiefe (Ta) der Außennut (4) in proportionaler Weise mit dem vom Ringstoß aus gemessenen Winkel abnimmt.

12. Einteiliger Ölabstreifring nach einem der vorstehenden Ansprüche, wobei die obere und die untere Hälfte des Ringkörpers (1) symmetrisch zueinander sind.

## Claims

1. A one-piece oil scraper ring with a ring body (1) that has a constant radial thickness (D) in the circumferential direction;
wherein two ridges (2), which are axially spaced apart from one another by an external groove (4), are circumferentially arranged on the outer running surface of the ring body in the circumferential direction;
**characterized in that**
openings (3) are arranged so as to extend radially from the bottom of the external groove to the inside of the ring body;
wherein two internal grooves (5) are arranged on the inside of the ring body and circumferentially extend in the circumferential direction;
wherein one of the internal grooves respectively begins in a region of each joint end; and
wherein the cross-sectional area of the internal grooves decreases from the ring joint in the direction of the back of the ring
wherein the depth (Ti) of the internal grooves (5) decreases from the ring joint in the direction of the back of the ring,
wherein the openings (3) are arranged only within an angular range of 0 ° to 135 ° and of 225 ° to 360 °, measured from the ring joint.

2. The one-piece oil scraper ring according to claim 1, wherein the openings (3) are arranged within an angular range of 0° to 90° and of 270° to 360°, measured from the ring joint.

3. The one-piece oil scraper ring according to one of the preceding claims, wherein the depth (Ti) of the internal grooves (5) amounts to zero in an angular range of 135° to 225°, preferably in an angular range of 165° to 195°, more preferably in a small angular range that essentially only includes the angle 180°, measured from the ring joint.

4. The one-piece oil scraper ring according to one of the preceding claims, wherein the depth (Ti) of the internal grooves (5) decreases proportionally to the angle measured from the ring joint.

5. The one-piece oil scraper ring according to one of the preceding claims, wherein the beginning of the internal grooves (5) is spaced apart from the respective joint end.

6. The one-piece oil scraper ring according to one of the preceding claims, wherein the axial height of the internal grooves (5) on the inside of the ring is smaller than the overall axial height of the ring.

7. The one-piece oil scraper ring according to claim 6, wherein the axial height of the internal grooves (5) on the inside of the ring decreases in the direction of the back of the ring starting from the ring joint.

8. The one-piece oil scraper ring according to one of the preceding claims, wherein the maximum depth of the internal grooves (5) lies in a range of 25% to 100%, preferably 50% to 100%, particularly 75% to 100%, of the axial height of the oil scraper ring.

9. The one-piece oil scraper ring according to one of the preceding claims, wherein the depth (Ta) of the external groove (4) decreases in the direction of the back of the ring starting from the two joint ends.

10. The one-piece oil scraper ring according to one of the preceding claims, wherein the depth (Ta) of the external groove (4) is constant in an angular range of 135° to 225°, preferably in an angular range of 165° to 195°, measured from the ring joint, particularly in a small angular range that essentially only includes the angle 180°.

11. The one-piece oil scraper ring according to one of the preceding claims, wherein the depth (Ta) of the external groove (4) decreases proportionally to the angle measured from the ring joint.

12. The one-piece oil scraper ring according to one of the preceding claims, wherein the upper and the lower half of the ring body (1) are realized symmetrically to one another.

## Revendications

1. Segment racleur d'huile monobloc comprenant un corps de segment (1) présentant une épaisseur radiale constante (D) dans le sens périphérique ;
dans lequel deux éléments jointifs (2) espacés axialement l'un de l'autre par une rainure extérieure (4) sont disposés sur une surface de roulement extérieure du corps de segment en s'étendant dans le sens périphérique ;
**caractérisé en ce que**
des ouvertures (3) sont disposées de façon à s'étendre radialement du fond de la rainure extérieure vers la face intérieure du corps de segment ;
dans lequel deux rainures intérieures (5) s'étendant dans le sens périphérique sont disposées sur la face intérieure du corps de segment ;
dans lequel l'une des rainures intérieures commence respectivement dans une zone de chaque extrémité de coupe, et dans lequel la surface de la section transversale des rainures intérieures diminue de la coupe du segment vers l'arrière du segment ;
dans lequel la profondeur (Ti) des rainures intérieures (5) diminue de la coupe du segment vers l'arrière du segment ;
dans lequel les ouvertures (3) sont disposées uniquement dans une plage angulaire de 0 à 135° et de 225 à 360° mesurée à partir de la coupe du segment.

2. Segment racleur d'huile monobloc selon la revendication 1, dans lequel les ouvertures (3) sont disposées dans une plage angulaire de 0 à 90° et de 270 à 360° mesurée à partir de la coupe du segment.

3. Segment racleur d'huile monobloc selon l'une des revendications précédentes, dans lequel la profondeur (Ti) des rainures intérieures (5) est nulle dans une plage angulaire de 135 à 225° mesurée à partir de la coupe du segment, de préférence dans une plage angulaire de 165 à 195°, plus préférablement dans une plage angulaire étroite qui n'inclut essentiellement que l'angle de 180°.

4. Segment racleur d'huile monobloc selon l'une des revendications précédentes, dans lequel la profondeur (Ti) des rainures intérieures (5) diminue proportionnellement à l'angle mesuré à partir de la coupe du segment.

5. Segment racleur d'huile monobloc selon l'une des revendications précédentes, dans lequel le début des rainures intérieures (5) est espacé de l'extrémité de coupe respective.

6. Segment racleur d'huile monobloc selon l'une des revendications précédentes, dans lequel la hauteur axiale des rainures intérieures (5) sur la face intérieure du segment est inférieure à la hauteur axiale totale du segment.

7. Segment racleur d'huile monobloc selon la revendication 6, dans lequel la hauteur axiale des rainures intérieures (5) sur la face intérieure du segment diminue en partant de la coupe du segment vers l'arrière du segment.

8. Segment racleur d'huile monobloc selon l'une des revendications précédentes, dans lequel la profondeur maximale des rainures intérieures (5) est comprise entre 25 et 100 %, de préférence entre 50 et 100 %, plus préférablement entre 75 et 100 %, de la hauteur axiale du segment racleur d'huile.

9. Segment racleur d'huile monobloc selon l'une des revendications précédentes, dans lequel la profondeur (Ta) de la rainure extérieure (4) diminue en partant des deux extrémités de coupe vers l'arrière du segment.

10. Segment racleur d'huile monobloc selon l'une des revendications précédentes, dans lequel la profondeur (Ta) de la rainure extérieure (4) est constante dans une plage angulaire de 135 à 225° mesurée à partir de la coupe du segment, de préférence dans une plage angulaire de 165 à 195°, plus préférablement dans une plage angulaire étroite qui n'inclut essentiellement que l'angle de 180°.

11. Segment racleur d'huile monobloc selon l'une des revendications précédentes, dans lequel la profondeur (Ta) de la rainure extérieure (4) diminue proportionnellement à l'angle mesuré à partir de la coupe du segment.

12. Segment racleur d'huile monobloc selon l'une des revendications précédentes, dans lequel les moitiés supérieure et inférieure du corps de segment (1) sont symétriques l'une par rapport à l'autre.
